# EUROPÄISCHE PATENTSCHRIFT

(11) **EP 4 027 659 B1**
(45) Veröffentlichungstag und Bekanntmachung des Hinweises auf die Patenterteilung: **07.10.2026**
(21) Anmeldenummer: 21150709.0
(22) Anmeldetag: 08.01.2021
(51) Int. Cl.: H04W 4/02, H04W 4/029

(54) **VERFAHREN ZUR BESTIMMUNG EINES ABSTANDSVERHALTENS EINER PERSON EINER GRUPPE UND/ODER EINE GRUPPE, COMPUTERPROGRAMM UND ENDGERÄT**
METHOD FOR DETERMINING THE DISTANCE OF A PERSON FROM A GROUP AND / OR A GROUP, COMPUTER PROGRAM AND TERMINAL
PROCÉDÉ DE DÉTERMINATION D'UN COMPORTEMENT À DISTANCE D'UNE PERSONNE DANS UN GROUPE ET/OU D'UN GROUPE, PROGRAMME INFORMATIQUE ET TERMINAL

(43) Veröffentlichungstag der Anmeldung: 13.07.2022
(73) Patentinhaber: Deutsche Telekom AG, 53113 Bonn (DE)
(72) Erfinder: Dr. WITYCH, Michael, 53227 Bonn (DE)
(74) Vertreter: karo IP

(56) Entgegenhaltungen:
- US-A1- 2017 206 334

## Beschreibung

Die Erfindung betrifft ein Verfahren zur Bestimmung eines Abstandsverhaltens einer Person einer Gruppe und/oder einer Gruppe. Ferner betrifft die Erfindung ein Computerprogramm und eine Steuereinheit.

Die Bestimmung des Abstandsverhaltens von Personen ist insbesondere bei Pandemien ein wichtiger Bestandteil zur Modellierung und Prognose von Infektionszahlen. Beispielsweise im Falle von Covid-19 setzen viele Länder Softwareapplikationen für Mobiltelefone zur Verfügung, die Kontaktinformationen zwischen Personen sammeln, verarbeiten und bewerten. So sollen etwaige Risikokontakte den jeweiligen Personen frühzeitig mitgeteilt werden.

Dergleichen Warnapps nutzen häufig Bluetooth-Verbindung zwischen den Mobiltelefonen, um beispielsweise eine Entfernung und/oder Dauer eines Kontaktes als relevante Parameter zu bestimmen. Die Parameter werden für unterschiedliche Messzeiträume, beispielsweise Tage oder Wochen ermittelt und zur Verarbeitung später gesammelt an einen zentralen Server weitergegeben, der dann beispielsweise einen Gruppenwert oder ein Gruppenverhalten bestimmt. Die Datenmenge die von dem Mobiltelefon zum Server übertragen werden muss, erhöht sich stark, je kleiner die Intervalle sind, in welchen die Parameter ermittelt werden.

Beispielsweise werden Datentupel bestehend aus Einzelkontaktdauer d und Abstandsintervall a aufgenommen. Zum Server werden bei der Übertragung alle die Datentupel (D, E) übertragen. Für die gewünschte Verwendung von solchen Apps (etwa oberhalb 30 % der Bevölkerung) müssen so erhebliche Datenmengen übertragen werden.

Es ist daher eine Aufgabe der Erfindung, ein Verfahren bereitzustellen, welches die Bestimmung eines Maßes eines Abstandsverhaltens einer Person oder einer Gruppe erlaubt, statistisch streng ist und bei der Übermittlung an einen Server eine Weiterverarbeitung erlaubt ohne jedoch große Datenmengen übertragen zu müssen.

US 2017/206334 A1 betrifft ein Proximity-Tracing-System, bei dem Personen elektronische "Tags" tragen, die die Nähe zu anderen Tags während "Sessions" erfassen. Dabei werden aus Abstand/"range" (ggf. auch als Surrogat, z. B. Signalstärke) und Zeit/Dauer "Profile Risk Values" für unterschiedliche Infektionserreger bzw. Übertragungsmodi berechnet, typischerweise mittels (gewichteter) Summationen/Integrationen über Zeitintervalle. Die so ermittelten Session-Daten bzw. Risikowerte werden im Tag gespeichert und/oder an eine entfernte Datenbank bzw. Server übertragen und dort für Auswertungen (z. B. Identifikation relevanter Kontakte) genutzt.

Die Aufgabe wird gelöst durch das Verfahren zur Bestimmung eines Abstandsverhaltens einer Person einer Gruppe und/oder einer Gruppe mit den Merkmalen des Anspruchs 1. Ferner wird die Aufgabe gelöst durch das vorgeschlagene Computerprogramm und die vorgeschlagene Steuereinheit. Weitere Vorteile, Wirkungen und Ausgestaltungen ergeben sich aus den Unteransprüchen, der Beschreibung und den beigefügten Figuren.

Es wird ein Verfahren zur Bestimmung eines Abstandsverhaltens einer Person einer Gruppe und/oder einer Gruppe vorgeschlagen. Das Verfahren ist insbesondre computerimplementiert, beispielsweise mittels einer App, ausführbar. Vorzugsweise ist das Verfahren zur Ausführung auf einem Mobiltelefon, Smartphone oder Smartdevices ausgebildet. Das Abstandsverhalten beschreibt beispielsweise ein Nutzerverhalten der Person. Insbesondere ist das Abstandsverhalten zur Beschreibung von Kontakten zwischen Personen der Gruppe ausgebildet. Das Abstandsverhalten beschreibt beispielsweise, wie nahe die Person einer weiteren Person der Gruppe kommt und/oder wie lange sich die Person in einer Umgebung der anderen Person aufhält. Das Verfahren ist beispielsweise zur Verwendung in einer Virenwarnapp, beispielsweise Coronawarnapp, ausgebildet.

Die Person ist Teil einer Gruppe, wobei die Gruppe eine offene oder eine geschlossene Menge an Personen darstellen kann. Beispielsweise ist die Gruppe eine Bevölkerung eines Landes, insbesondere die Bevölkerung eines Landes, die eine das Verfahren anwendende Applikation dauerhaft oder zeitweise nutzt. Die Gruppe umfasst mindestens zwei, vorzugsweise mindestens 1000 und im Speziellen mindestens 1 Millionen Personen.

Jeder Person der Gruppe ist ein Endgerät zugeordnet und/oder zuordenbar. Im Speziellen ist jeder Person genau ein Endgerät zugordnet. Das Endgerät ist beispielsweise ausgebildet, eine drahtlose Verbindung zu einem weiteren Endgerät einer Person der Gruppe aufzubauen. Beispielsweise ist die drahtlose Verbindung eine Bluetooth-Verbindung, insbesondere low energy Bluetooth-Verbindung, eine Infrarotverbindung, eine Funk- oder WLAN-Verbindung. Das Endgerät ist vorzugsweise ein Mobiltelefon, beispielsweise ein Smartphone. Ferner kann das Endgerät ein spezifisches Endgerät zur Verfahrensdurchführung sein, beispielsweise eine Steuereinheit und/oder Sender-Empfänger-Einheit. Ferner bildet das Endgerät beispielsweise ein Tablett als Smartdevice. Das Endgerät ist insbesondere ein mobiles und/oder tragbares Endgerät der Person. Beispielsweise kann dem Endgerät eine spezifische Kennung (ID) zugeordnet sein. Die Kennung kann dauerhaft festgelegt sein oder zeitlich variieren, beispielsweise durch Abruf einer neuen ID bei einem Server.

Die Endgeräte sind jeweils ausgebildet, über einen Messzeitraum, welcher festlegbar und/oder festgelegt ist, mindestens einen Messdatensatz zu generieren. Der Messzeitraum bildet beispielsweise ein Zeitintervall zwischen Zeitpunkten t1 und t2. Der Messzeitraum beträgt beispielsweise einen Tag, eine Woche oder einen Monat. Für den Messzeitraum werden relevante Parameter ermittelt und/oder bestimmt, welche vom Messdatensatz umfasst sind. Relevante Parameter sind beispielsweise eine Einzelkontaktdauer und/oder ein Abstand, z.B. Abstandsintervall, zwischen zwei Personen der Gruppe, im Speziellen zwischen den Endgeräten der zwei Personen. Beispielsweise wird zwischen den zwei Endgeräten eine drahtlose Verbindung, insbesondere Bluetooth-Verbindung aufgebaut, wobei basierend auf der Bluetooth-Verbindung die relevanten Parameter, beispielsweise Einzelkontaktdauer und/oder Abstandsintervall ermittelt werden. Insbesondere umfasst der Messdatensatz Datentupel. Die relevanten Parameter werden im Speziellen für Intervalle und/oder Klassen ermittelt. Der Messzeitraum ist insbesondere für die Endgeräte der Gruppe identisch. Insbesondere werden die relevanten Parameter des Messdatensatzes zyklisch, beispielsweise im Minutentakt ermittelt. Der Messdatensatz wird insbesondere dauerhaft oder vorübergehend am jeweiligen Endgerät gespeichert.

Der Messdatensatz umfasst jeweils eine Verteilung von Einzelkontaktdauern und/oder beschreibt diese. Die Verteilung ist insbesondere bezüglich und/oder für die Einzelkontaktdauern und Abstandsintervalle. Beispielsweise umfasst der Messdatensatz eine Unterteilung des Abstands zwischen dem Endgerät des Messdatensatzes zu einem oder mehreren Endgeräten der Gruppe in Abstandsintervalle, im Speziellen Klassen genannt, beispielsweise kleiner 0,5 m, 0,5 m bis 1 m, 1 m bis 1,5 m und größer 1,5 m. Insbesondere ist die Einzelkontaktdauer in den Messdatensätzen ebenfalls in Intervalle bzw. Klassen unterteilt, beispielsweise kleiner 30 s, 30 s bis 1 min, 1 min bis 5 min und größer 5 min. Die Verteilung kann beispielsweise im Messdatensatz matrixartig bzw. als Tabelle hinterlegt sein, wobei die Einträge in der Matrix bzw. Tabelle eine Anzahl der stattgefundenen Kombination von Einzelkontaktdauer und Abstandsintervall wiedergeben. Insbesondere ist die Einzelkontaktdauer eine ununterbrochene Kontaktdauer zwischen den beiden Endgeräten im jeweiligen Abstandsintervall.

Basierend auf dem Messdatensatz wird für das zugehörige Endgerät, insbesondere die zugehörige Person, ein Einzelperson-Abstandsverhaltens-Maß ermittelt. Insbesondere wird das Einzelperson-Abstandsverhaltens-Maß basierend auf den Einzelkontaktdauern und Abstandsintervallen, im Speziellen deren zeitlicher Verteilung, ermittelt. Das Einzelperson-Abstandsverhaltens-Maß beschreibt beispielsweise das Verhalten der jeweiligen Person bezüglich des Abstandshalten zu anderen Personen. Beispielsweise kann das Einzelperson-Abstandsverhaltens-Maß zur Bewertung einer Infektionsgefahr und/oder Infektionsrisiko der Person basierend auf deren Kontakte dienen. Beispielsweise wird für eine Einzelkontaktdauer, insbesondere mit zugehörigen Abstandsintervall, jeweils ein Riskwert ermittelt. Der Riskwert ist vorzugsweise ein dimensionslose bzw. einheitslose Größe und/oder ein Prozentwert. Insbesondere wird für jede Einzelkontaktdauer ein solcher Riskwert ermittelt. Der Riskwert kann beispielsweise ein Übertragungsrisiko eines Virus und/oder einer Krankheit von einer zur nächsten Person für eine ein Datentupel (Abstandsintervall; Kontaktdauer) beschreiben.

Das Einzelperson-Abstandsverhaltens-Maß wird rekursiv ermittelt. Insbesondere wird das Einzelperson-Abstandsverhaltens-Maß rekursiv aus den Riskwerten ermittelt. Statt einer reinen additiven Verknüpfung von Einzelkontaktdauern und/oder von Riskwerten, wird eine Verknüpfung rekursive Art angewendet, sodass eine genaueres Maß zur Kontaktbewertung erhalten wird und zum Beispiel bei einer Mehrzahl an Kontakten keine Überbewertung stattfindet. Insbesondere erfolgt die Ermittlung des Einzelperson-Abstandsverhaltens-Maßes statistisch streng. Das Ermitteln des Einzelperson-Abstandsverhaltens-Maßes basierend auf der Vielzahl Einzelkontaktdauern und/oder Abstandsintervallen stellt somit insbesondere eine Kompression des ursprünglichen Messdatensatzes dar, enthält bzgl. der Zielgröße der potenziellen Infektionswahrscheinlichkeit aus allen Kontakten aber keine Informationsverlust.

Im Speziellen ist es vorgesehen, dass das Einzelperson-Abstandsverhaltens-Maß an eine Zentrale, beispielsweise Server oder an andere Geräte, insbesondere Endgeräte, bereitgestellt wird. Statt der Übertragung der Vielzahl an Daten des Messdatensatzes genügt die Übertragung des Einzelperson-Abstandsverhaltens-Maßes.

Die Ermittlung des Einzelperson-Abstandsverhaltensmaßes erfolgt insbesondere auf dem Endgerät selbst.

Beispielsweise wird als rekursiver Zusammenhang zur Ermittlung des Einzelperson-Abstandsverhaltens-Maß Rₙ auf die einzelnen Riskwerte rₙ zurückgegriffen. Insbesondere wird hierzu ein auf Rₙ=Rₙ₋₁+(1-Rₙ₋₁)*rₙ und R₀=0 basierender rekursiver Zusammenhang angewendet.

Die Erfindung basiert auf der Überlegung, dass statt der Übertragung eines ganzen Messdatensatzes mit einer Vielzahl an Daten, im Endgerät selbst ein Maß für das Abstandsverhalten der Person ermittelt wird, welches ohne wesentliche Verluste an beliebige Stellen, z.B. Server, mit geringem Datenvolumen übertragen werden kann, wobei dieses Maß zusätzlich statistisch streng berechnet ist und eine verbesserte Bewertung des Verhaltens der Person ermöglicht.

Optional ist es vorgesehen, dass die Einzelkontaktdauern und die Abstandsintervalle jeweils in Klassen unterteilt sind. Insbesondere ist es vorgesehen, dass die Unterteilung der Einzelkontaktdauern feiner ist als die Unterteilung der Abstandsintervalle. Beispielsweise werden die Abstandsintervalle in zwei oder drei Klassen aufgeteilt, wobei die Einzelkontaktdauern vorzugsweise in mindestens 4 Kontaktdauerklassen geteilt werden. In einer besonders bevorzugten Ausgestaltung werden die Einzelkontaktdauern in folgende Klassen eingeteilt: 0-3 Minuten, 3-10 Minuten, 10-15 Minuten und größer 15 Minuten. Die Abstandsintervalle werden besonders bevorzugt in die Intervalle 0-1,5 m und 1,5-2 m eingeteilt, wobei Abstände größer 2 m beispielsweise verworfen werden. Im Speziellen ist die Tabelle und/oder Verteilung basierend auf folgendem Schema aufgebaut, wobei aᵢ und bᵢ Häufigkeiten der gemessenen Datentupel (D, E) sind:
E: Einzelkontaktdauer (Intervalle in Minuten)

| D: Abstandsintervall | 0-3 | 3-10 | 10-15 | >15 |
|---|---|---|---|---|
| 0-1,5 m | a₁ | b₁ | c₁ | d₁ |
| 1,5-2 m | a₂ | b₂ | c₂ | d₂ |

Insbesondere ist es vorgesehen, dass der Messdatensatz ein Histogramm der Einzelkontaktdauern und/oder Abstandsintervalle, insbesondere deren Verteilung, umfasst und/oder als Basis dafür ausgebildet ist. Alternativ und/oder ergänzend wird basierend auf dem Messdatensatz das Histogramm und/oder die Verteilung ermittelt. Die Ermittlung der Verteilung und/oder des Histogramms kann insbesondere im und/oder durch das Endgerät erfolgen, alternativ auf einem Server und/oder Zentralmodul.

Besonders bevorzugt ist es, dass das Einzelperson-Abstandsverhaltens-Maß einen Skalar bildet. Insbesondere ist der Skalar dimensionslos. Besonders bevorzugt ist der Skalar ein prozentualer Wert. Im Speziellen kann der Messdatensatz und/oder die Verteilung als ein Tensor mindestens zweiter Stufe aufgefasst werden, wobei das Einzelperson-Abstandsverhaltens-Maß einen Tensor nullter Stufe entspricht.

Insbesondere bildet und/oder beschreibt der Riskwert eine gewichtete Abstandsdauer. Insbesondere basiert die Gewichtung auf Analysen und/oder Datensätzen von biologischer, virologischer, medizinischer und/oder statistischer Erkenntnisse, beispielsweise bezüglich Übertragungswegen und Umgebungseinflüssen.

Die Gewichtung zum Riskwert erfolgt im Speziellen bezüglich der Einzelkontaktdauer und des Abstandsintervalls. Die Gewichtung kann mittels einer Gewichtungsfunktion, z.B. W, erfolgen und/oder mittels hinterlegen Wertetabellen. Vorzugsweise ist der Riskwert r gleich der W(D, E). Die Gewichtsfunktion W ist vorzugsweise eine streng monoton fallende Funktion, im Speziellen eine Exponentialfunktion oder gebrochen rationale Funktion. Die streng monoton fallende Eigenschaft bezieht sich insbesondere auf einen zunehmendem Abstand. Hinsichtlich der Einzelkontaktdauer ist die Gewichtsfunktion für zunehmende Kontaktdauern vorzugsweise streng monoton steigend. Die Gewichtsfunktion bildet somit beispielsweise eine Umrechnung des Wertepaares (D, E) in einen Wahrscheinlichkeitswert als Riskwert.

In einer besonders bevorzugten Ausgestaltung ist es vorgesehen, dass die Endgeräte das jeweils zugehörige Einzelperson-Abstandsverhaltens-Maß an ein Zentralverarbeitungsmodul bereitstellen. Das Zentralverarbeitungsmodul ist beispielsweise ein Server. Im Folgenden werden Server und Zentralverarbeitungsmodul gleichwertig verwendet.

Insbesondere sind die Endgeräte und das Zentralverarbeitungsmodul datentechnisch koppelbar. **Im** Speziellen ist es vorgesehen, dass die Endgeräte ausgebildet sind, das Einzelperson-Abstandsverhaltens-Maß regelmäßig, beispielsweise täglich oder wöchentlich, an das Zentralverarbeitungsmodul bereitzustellen. Das jeweilige Einzelperson-Abstandsverhaltens-Maß stellen die Endgeräte dem Zentralverarbeitungsmodul vorzugsweise als Skalar bereit.

Das Zentralverarbeitungsmodul bestimmt, berechnet und/oder ermittelt basierend auf den bereitgestellten Einzelperson-Abstandsverhaltens-Maß eine Gruppen-Abstandsverhaltens-Maß. Das Gruppen-Abstandsverhaltens-Maß beschreibt beispielsweise das Abstandsverhalten der Gruppe bzw. der Personen in der Gruppe. Basierend auf den Gruppen-Abstandsverhaltens-Maßen für aufeinander folgende Zeiträume ist beispielsweise eine Kontrolle der Wirksamkeit von Maßnahmen zur Eindämmung eines Virus und/oder einer Infektionskrankheit abschätzbar, sofern die Maßnahmen sich auf das Abstandsverhalten zu anderen Personen beziehen. Dies basiert auf der Überlegung, dass es in einer Gruppe, beispielsweise Gesellschaft, Personen gibt, die ihr Abstandsverhalten zu Personen erweitern und Schutzmaßnahmen strikt umsetzen und andere Personen ihr Abstandsverhalten kaum ändern, wobei zur Eindämmung z. B. einer Epidemie oder Pandemie keine Einzelpersonen, sondern Gruppen zu betrachten sind.

Im Speziellen wird das Gruppen-Abstandsverhaltens-Maß für Teilmengen der Personen aus der Gruppe ermittelt, beispielsweise durch gezielte Auswahl von Personen in einer Risikogruppe, Berufsgruppe, Gruppe aus einem geographischen Gebiet oder einer Altersgruppe. Insbesondere wird das Gruppen-Abstandsverhaltens-Maß für Teilmengen von Personen basierend auf einer Differenzierung nach geographischen Gebiet und/oder nach Altersgruppe vorgenommen, wobei beispieslweise eine Postleitzahl und/oder das Geburtsjahr am Endgerät eingegeben und/oder hinterlegt wird.

Insbesondere erfolgt die Ermittlung, Berechnung und/oder Bestimmung des Gruppen-Abstandsverhaltens-Maß rekursiv basierend auf den Einzelperson-Abstandsverhaltens-Maßen. Insbesondere wird das Gruppen-Abstandsverhaltens-Maß basierend auf einem ähnlichen oder identischen rekursiven Zusammenhang ermittelt, wie das Einzelperson-Abstandsverhaltens-Maß aus den Riskwerten.

Insbesondere liegt eine reine "nacheinander" Addition der Einzelperson-Abstandsverhaltens-Maße, die zeitlich nacheinander in der Zentraleinheit eintreffen, vor. Würde in diesem letzten Fall ein jedes Einzelperson-Abstandsverhaltens-Maß eine virtuelle Infektionswahrscheinlichkeit mit einem Virus bedeuten, so enthielte der additive Gruppenwert als Gruppen-Abstandsverhaltens-Maß die fiktive Infektionswahrscheinlichkeit der Gruppe. Wäre der Wert des Gruppen-Abstandsverhaltens-Maß z.B. 4210% so würde dieses bedeuten, das 42 Personen der Gruppe fiktiv als zu 100% infiziert bewertet werden und eine Person zu 10% als infiziert bertrachtet wird, und dieses ist unabhängig davon wie groß diese Gruppe ist. Die Anzahl der addierten Einzelperson-Abstandsverhaltens-Maße muß also nicht berechnet werden. Das Gruppen-Abstandsverhaltens-Maß beinhaltet in diesem Fall also einen direkten Bezug zu einer Infektionswahrscheinlichkeit. Es ist zwar vorerst nur eine fiktive Infektionswahrscheinlichkeit und auch nur eine fiktive Anzahl an Personen, die als zu 100% infiziert gelten. Wenn die fiktive Infektionswahrscheinlichkeit aber auf der Basis ermittelt wurde, dass alle Kontaktpersonen zu 100% fiktiv infiziert sind und dieses am gleichen Tag ihrer Infektionsentwicklung an die jeweilige Einzelperson weitergegeben haben (Daraus folgt ein gleicher Gewichtsfaktor für einen Kontakt, da die Infektionsweitergabe vom zeitlichen Abstand des Auftretens der ersten Syptome beim Infizierten abhängig sind), so kann bei der Bewertung und Auswertung des Gruppen-Abstandsverhaltens-Maßes die aktuelle Infektionsrate dieser Gruppe genutzt werden, um die fiktive Anzahl an Infizierten, unsere ca. 41 Personen, in die realistische Anzahl an statistisch infizierten Personen umzurechnen. Damit liegt dann eine Auswertung des Gruppen-Abstandsverhaltens-Maßes vor, die in engem Bezug zu der erwartbaren Anzahl an Infizierten steht. Wird die Personenanzahl n der Gruppe mitgezählt, dann kann auch eine Infektionsrate IR der Gruppe berechnet werden aus IR=41/n. Dieses ist nicht in dieser Güte möglich, wenn in den einzelnen Endgeräten Gesamtdauern aufsummiert werden und diese für eine Gruppe nochmals aufsummiert werden, da dann der Zusammenhang verloren geht, dass eine Person, die statistisch bereits zu 50% infiziert ist, wenn sie ein weiteres Risiko zu 80% zusätzlich eingeht insgesamt statistisch nur zu 90% infiziert ist. Bei reiner Summenbildung entsteht mit 130% ein zu hoher falscher Wert, der - wenn er an den Server übertragen wird - von diesem nicht mehr auf 90% korrigiert werden kann ohne dass noch zusätzliche Infromationen übertragen werden. Dieses ist das Dilemma, wenn ein Endgerät nur eine Kontaktdauersumme für eine Abstandsintervall als ein Skalar an den Server übertragen würde. Auch müste das Endgerät dieses zusätzlich für jedes Abstandsintervall übertragen.

Optional bestimmt, ermittelt und/oder berechnet das Zentralverarbeitungsmodul eine Verteilung und/oder ein Histogramm, beispielsweise für die Parameter D, E und/oder Datentupel (D, E) des Messdatensatzes. Die Ermittlung, Bestimmung und/oder Berechnung der Verteilung und/oder des Histogramms erfolgt vorzugsweise basierend auf den bereitgestellten skalaren Einzelperson-Abstandsverhaltens-Maß und/oder dem Gruppen-Abstandsverhaltens-Maß und der Kenntnis der mittleren Verteilung der Daten in den Histogrammen der Einzelpersonen. Diese mittlere Verteilung basiert auf der Kenntnis von Daten der Vergangenheit wobei diese Vergangenheit mit der aktuellen Situation gut vergleichbar sein muss, also z.B. nicht zu weit in der Vergangenheit liegen sollte. Insbesondere erfolgt die Bestimmung der Verteilung und/oder des Histogramms ohne Bereitstellung und/oder ohne Rückgriff auf die einzelnen aktuellen Messdatensätze der Endgeräte. Wird die mittlere Verteilung der Daten in den Histogrammen der Einzelpersonen bestimmt, so wird diese Verteilung dem Server bekannt gemacht und gilt dann über einen vorgegebenen Zeitraum als Schlüssel für die Transformation eines Gruppen-Abstandsverhaltens-Maß in ein Histogramm für eine Gruppe.

In einer Ausgestaltung der Erfindung ist es vorgesehen, dass Veränderungen eines Kontaktverhaltens einer Person der Gruppe, mehrere Personen der Gruppe und/oder der Gruppe ermittelt, bestimmt und/oder berechnet werden. Insbesondere erfolgt die Bestimmung, Ermittlung und/oder Berechnung der Veränderung des Kontaktverhaltens basierend auf dem bereitgestellten und/oder ermittelten skalaren Einzelperson-Abstandsverhaltens-Maßen und/oder dem Gruppen-Abstandsverhaltens-Maß. Beispielsweise kann eine Veränderung eines persönlichen Kontaktverhaltens einer Person im Endgerät selbst bestimmt und/oder ermittelt werden, wobei beispielsweise Einzelperson-Abstandsverhaltens-Maße unterschiedlicher Tage verglichen werden. Die Ermittlung, Bestimmung und/oder Berechnung der Veränderung eines Kontaktverhaltens erfolgt vorzugsweise mittels einer Vergleichsmethode und/oder einem Hypothesentest. Hierzu kann ein Endgerät zur Steigerung der Güte eines Hypothesentests auch die Standardabweichung eines jeden Einzelperson-Abstandsverhaltens-Maßes basierend auf den bekannten Genauigkeitsmaßen der Einflußgrößen ermitteln, was dem Ausgleichungsfachmann bekannt ist. Diese Standardabweichungen können auch zusammen mit den Einzelperson-Abstandsverhaltens-Maßen an die Zentraleinheit übertragen werden, um dort die Gruppen-Abstandsverhaltens-Maße auf Veränderung zu prüfen, was ebenfalls mittels eines Hypothesentests geschehen kann, was dem Ausgleichungsfachmann ebenfalls bekannt ist. Diese Hypothesentests bewerten zwar das Verhalten von Einzelpersonen und/oder Gruppen auf signifikante Veränderungen im Verhalten, aber durch den direkten Bezug der Verhaltens-Maße zu fiktiven und real zu erwartenden Infektionen sagt der Hypothesentest auch aus, ob eine Verhaltensänderung zu mehr oder weniger Infektionen führen wird, sofern alle anderen das Infektionsgeschehen beeinflussenden Faktoren gleich geblieben sind. Dieses geschieht über einen einseitigen Hypothesentest. In einem solchen einseitigen Hypothesentest kann aber das Ausmaß der Änderung getestet werden, indem man gegen ein vorgegebenes Ausmass an Veränderung testet. Und genau diese mit einseitigen Hypothesentests überprüfbare Wirkung will man durch hoheitliche Vorgaben bzgl. des Kontaktverhaltens erzeugen, aber bisher war der Bezug zu den Auswirkungen nicht genau genug bekannt, sondern nur grob in der Tendenz bekannt.

Besonders bevorzugt ist es, dass das Gruppen-Abstandsverhaltens-Maß und/oder die Einzelperson-Abstandsverhaltens-Maße zyklisch ermittelt werden, vorzugsweise mindestens täglich, mindestens wöchentlich und/oder 14-täglich. Alternativ und/oder ergänzend ist es vorgesehen, dass die Ermittlung des Gruppen-Abstandsverhaltens-Maß und/oder des Einzelperson-Abstandsverhaltens-Maß zeitlich beabstandet beispielsweise von mindestens einer Stunde, im Speziellen mindestens einen Tag oder einer Woche erfolgt.

Einen weiteren Gegenstand der Erfindung bildet ein Computerprogramm zur Ausführung auf einem Computer, einer Steuereinheit, einem Server und/oder im Endgerät. Das Computerprogramm ist ausgebildet das Verfahren oder Teile des Verfahrens bei seiner Ausführung durchzuführen und/oder anzusteuern.

Einen weiteren Gegenstand der Erfindung bildet eine Steuereinheit, beispielsweise ein Endgerät oder einen Server. Die Steuereinheit ist ausgebildet das Verfahren wie vorher beschrieben durchzuführen. Insbesondere sind in der Steuereinheit Verfahrensschritte als konstruktive Vorrichtungsmerkmale ausgebildet.

Weitere Vorteile, Wirkungen und Ausgestaltungen ergeben sich aus der beigefügten Figur und deren Beschreibung. Dabei zeigt:

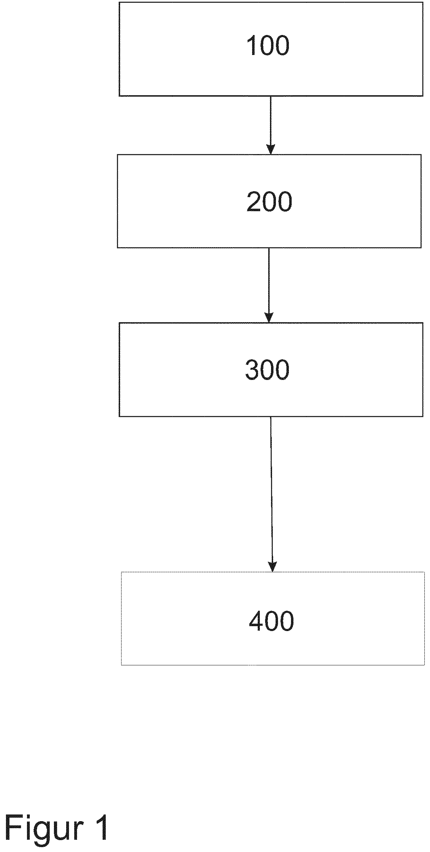

Figur 1 ein Ausführungsbeispiel eines Verfahrensablaufs zur Bestimmung eines Abstandsverhaltens.

Figur 1 zeigt beispielhaft einen Ablauf eines Verfahrens zur Bestimmung des Abstandsverhaltens einer Person einer Gruppe und/oder einer Gruppe. In einem Verfahrensschritt 100 wird von einem Smartphone als Endgerät einer Person der Gruppe ein Messdatensatz ermittelt. Hierzu weist das Endgerät eine Bluetoothschnittstelle auf und sucht nach weiteren Endgeräten von Personen der Gruppe, die ebenfalls eine aktivierte Bluetoothschnittstelle aufweisen. Findet das Endgerät dergleichen Endgeräte in seiner Umgebung, wird beispielsweise eine Bluetoothverbindung aufgebaut und/oder das Bluetoothsignal ausgewertet. Insbesondere ermittelt das Endgerät basierend auf der Bluetoothverbindung und/oder dem Bluetoothsignal eine Entfernung zwischen den beiden Endgeräten und bestimmt wie lange der Kontakt der zwischen den beiden Endgeräten ununterbrochen vorlag. Basierend auf dieser und weiteren der gleichen Messungen, beispielsweise für weitere und/oder andere Endgeräte, wird der Messdatensatz für das Endgerät der Person generiert. Beispielsweise wird die gemessene Entfernung einem Abstandsintervall zugeordnet und ferner vorzugsweise die zugehörige Dauer des Kontakts als Einzelkontaktdauer gesetzt. Der Messdatensatz wird vorzugsweise über einen längeren Zeitraum, beispielsweise 24 Stunden generiert. Hat das jeweilige Endgerät Kontakt zu mehreren Endgeräten und/oder wiederholten neuen Kontakt zu einem Endgerät umfasste Messdatensatz eine Mehrzahl an Datentupel (D, E) bestehend aus Abstandsintervall D und Einzelkontaktdauer E.

In einem Verfahrensschritt 200 wird basierend auf dem Messdatensatz eine Bestimmung von Riskwerten risk durchgeführt. Hierzu kann beispielsweise auf eine experimentell erhaltene und/oder bestätigte Gewichtsfunktion W(D, E) zurückgegriffen werden, welche ein brutto Risiko einer Virusübertragung für das vorliegende Datentupel (D, E) ergibt. Der Risk-Wert eines Kontakts des Endgeräts 1 zu einem weiteren Endgerät 2 für die Einzelkontaktdauer E und das Abstandsintervall D wird als risk1 gesetzt. Selbiges erfolgt für weitere Kontakte des Endgeräts 1, beispielsweise zu dem Endgerät 2 oder anderen Endgeräten, um so risk2, risk3, usw. zu erhalten.

Basierend auf den Riskwerten riskX eines Endgeräts werden rekursive Infektionswahrscheinlichkeiten riskXY, riskXYZ etc. berechnet, wobei der rekursive Zusammenhang risk12=risk1+(1-risk1)*risk2, risk123=risk12+(1-risk12)*risk3 etc. angewendet wird. Im Falle der Berechnung von risk12 wäre dann risk2 der brutto Riskwert und der dazugehörige netto Riskwert wäre dann (1-risk1)*risk2. Es gilt auch risk2>(1-risk1)*risk2=risk2-risk1 *risk2, da risk1 *risk2>0 gilt, da risk1 und risk2 positive risk Werte sind.

Betrachtet man hierin beispielsweise risk12=risk1+(1-risk1)*risk2 mit risk1 und risk2 in der Dimension [100%], so könnte man denken, dass die Riskwerte risk1 und risk2 proportional zu den Dauern E1 und
E2 sind. Das sind sie aber nicht, da zwischen der Dauer und dem Riskwert kein linearer Zusamenhang besteht.

Der Messdatensatz des Endgerätes und/oder die Messdatensätze der Endgeräte gelten insbesondere unabhängig davon aus welchem Personen Kontakt, B, C, ... die App A das Tupel (D, E) erhoben hat. Die rekursive Beziehung der riskXYZ... liefert einen Skalar. Mittels des rekursiven Zusammenhangs lassen sich für jedes Endgerät alle Kontakte zu anderen Endgeräten verknüpfen. Alle so verknüpften Kontakte eines Endgerätes liefert das Einzelperson-Abstandsverhaltens-Maß riskX der jeweiligen Person. Für die Endgeräte, z.B. A, B, C, werden die Einzelperson-Abstandsverhaltens-Maße riskA, riskB, riskC genannt. Die Bestimmung des Einzelperson-Abstandsverhaltens-Maß durch rekursive Verknüpfung der Kontakte des jeweiligen Endgeräts erfolgt im Verfahrensschritt 300, wobei der Verfahrensschritt im jeweiligen Endgerät durchgeführt wird.

Optional wird basierend auf den Einzelperson-Abstandsverhaltens-Maßen riskX in einem Verfahrensschritt 400 eine Verteilung der Kontaktdauern der Gruppe bestimmt, wobei dies ohne Rückgriff auf die gesamten Messdatensätze erfolgt und alleine auf den Einzelperson-Abstandsverhaltens-Maßen riskX und einer bekannten mittleren Verteilung der Abstandsdauern aus der Vergangenheit fußt. Der Verfahrensschritt 400 erfolgt vorzugsweise zentral auf einem Server, wobei dem Server die Einzelperson-Abstandsverhaltens-Maße riskX der Endgeräte bereitgestellt sind.

Im Endgerät A wird basierend auf den Einzelkontaktdauern bei einem Abstand von z.B. 0-2m zu unterschiedlichen Personen der Gruppe ein Verhaltenshistogramm im Endgerät gebildet:
Endgerät A: Bei 0-2m Abstand:
Anzahl A1 Einzel-Kontakte mit 0-5 Minuten
Anzahl A2 Einzel-Kontakte mit 5-10 Minuten
Anzahl A3 Einzel-Kontakte mit 10-15 Minuten
Anzahl A4 Einzel-Kontakte mit 15-20 Minuten
Ferner wird im Endgerät A riskA ermittelt.

Selbiges wird für die weiteren Endgeräte, z.B. B, C,..., durchgeführt: Endgerät B: Bei 0-2m Abstand:
Anzahl B1 Einzel-Kontakte mit 0-5 Minuten
Anzahl B2 Einzel-Kontakte mit 5-10 Minuten
Anzahl B3 Einzel-Kontakte mit 10-15 Minuten
Anzahl B4 Einzel-Kontakte mit 15-20 Minuten
Ermittelung im Endgerät B von risk B.

Basierend auf den riskX wird ein Gruppen-Abstandsverhaltens-Maß riskGruppe ermittelt. Dies erfolgt rekursiv gemäß:
riskGruppe=riskAB=riskA +(1-riskA)*riskB. Falls ein Drittes Endgerät C der Gruppe zugehörig ist folgt beispielsweise analog: riskGruppe=riskABC=riskAB + (1-riskAB)*riskC

Danach wird der Skalar riskGruppe dekodiert, beispielsweise von einem zentralen Server, in ein Histogramm unter der Annahme zur gleichen Verteilung in A und in B. Die relativen Häufigkeiten R1, R2 , R3 und R4 für A1, A2, A3 und A4 seinen die gleichen wie für B1, B2, B3 und B4. Wenn A also AN=A1+A2+A3+A4 Einzelkontakte habe, dann verteilen sie sich mit Ai auf die einzelnen Dauerintervalle. Entsprechendes gelte für BN=B1+B2+B3+B4 und der Verteilung auf die Bi durch die identischen relativen Häufigkeiten Ri. Die Verteilung der Ri sei wie folgt:
R1:R2:R3:R4 = 39:8:2:1

Somit folge z.B. R1=39/50=0,78 und R4=0,02.

Ferner gelte N=AN+BN. Es ergibt sich beispielsweise folgende Annahmeverteilung für A und B zusammen:
Bei 0-2m Abstand:
Anzahl N*R1 Einzel-Kontakte mit 0-5 Minuten Cluster, aber dem Mittelwert 2,5 als Einzel-Kontaktdauer-Länge
Anzahl N*R2 Einzel-Kontakte mit 5-10 Minuten Cluster, aber dem Mittelwert 7,5 als Einzel-Kontaktdauer-Länge
Anzahl N*R3 Einzel-Kontakte mit 10-15 Minuten Cluster, aber dem Mittelwert 12,5 als Einzel-Kontaktdauer-Länge
Anzahl N*R4 Einzel-Kontakte mit 15-20 Minuten Cluster, aber dem Mittelwert 17,5 als Einzel-Kontaktdauer-Länge.

Mit der R1:R2:R3:R4 und den kleinsten ganzzahligen Lösungen für alle Ri, also 39:8:2:1, und R1=39, R2=8, R3=2 und R1=1 wird rekursiv der Wert SkalarGruppe_Histogramm rekursiv berechnet, indem rekursiv nacheinander 39 mal der Riskwert für 0-5 Minuten, danach 8 mal der Rsikwert für für 5-10 Minuten, danach 2 mal der Riskwert für 10-15 Minuten und zuletzt einmal der Riskwert für 15-20 Minuten mit der Formel riskneu=riskalt+(1-riskalt)*Riskwert verarbeitet wird. Der letzte riskneu Wert ist dann unser SkalarGruppe_Histogramm Wert, der äquivalent zu einem Histogramm 39, 8, 2, 1 für die unterschiedlichen Dauerintervalle ist.

Der Wert SkalarGruppe_Histogramm wird dann rekursiv so oft von riskGruppe "rekursiv subtrahiert" und die feste Anzahl NHistogramm=39+8+2+1=50 nach jedem Schritt neu auf die 4 Intervalle anteilsmässig der festen Verteilung folgend akkumuliert, bis die Bedingung riskGruppe<SkalarGruppe_Histogramm gilt. Der Vorgang "rekursiv subtrahiert" folgt aus der Umstellung der Gleichung risk12=risk1 +(1-risk1)* risk2 zu: $risk 1 = \left(risk12-risk2\right) / \left(1-risk2\right)$ worin $risk 12 = initialer Wert von riskGruppe$ $risk 2 = SkalarGruppe_Histogramm und$ risk1= reduzierter Wert von riskGruppe durch SkalarGruppe_Histogramm

Danach erfolgt ein Umspeichern von risk1 auf risk12 und eine erneute "rekursive Subtraktion" von risk2 bis risk1 <risk2 gilt, also bis der verbliebene Rest risk1 kleiner als SkalarGruppe_Histogramm ist. Dieser Rest risk1 wird dann nach ebenfalls fest vorgegebenen Kriterien verteilt, so dass der Rest danach ausreichend genau Null ergibt. Mit jeder "rekursiven Subtraktion" des festen Wertes SkalarGruppe_Histogramm werden also immer 50 Dauern ganzzahlig ensprechend 39/8/2/1 auf die 4 Zeitintervalle verteilt. Die Verteilung von N erfolgt also in unserem Beispiel sukzessive durch die Verteilung einer festen Anzahl k<N, im Beispiel mit k=50, nach festen bekannten Kriterien, die aus der Vergangenheit abgeleitet worden sind.

Mit anderen Worten - dem Server muss der numerische Wert der zu verteilenden Summe N=AN+BN=(A1+A2+A3+A4 + B1+B2+B3+B4) nicht bekannt sein und die Einzelwerte Ai und Bi müssen auch nicht von den Devices zum Server übertragen werden. Die Erstellung des dekodierten Histogramms einer Gruppe (oder aller Apps) kann der Server eigenständig ohne diese Information machen, indem er von dem Tages risk Wert der Gruppe, riskGruppe, dann jeweils für ein gewolltes vorgegebenes Histogramm 39-8-2-1 ununterbrochener Kontaktdauern einen dazugehörigen risk Anteil, SkalarGruppe_Histogramm, rekursiv vom Ausgangswert riskGruppe "subtrahiert" bis riskGruppe< SkalarGruppe_Histogramm geworden ist. Bei sehr großem Wert für N könnte sogar darauf verzichtet werden den letzten Rest in der Variablen riskGruppe weiter zu verteilen.

Im Speziellen kann die Befüllung des Gruppenhistogramms im Server mit einem Trick auch schneller erfolgen und arbeitet dabei wie folgt:
Indem immer fixe vordefinierte risk Werte rekursiv subtrahiert werden, die für ganzzahlige Vielfache der Verteilung 39/8/2/1, z.B. 390/80/20/10 gelten. Die direkte Verteilung von einmalig 390/80/20/10 bedeutet dann, dass einmalig ein Riskwert rekursiv subtrahiert werden muß, der aus einer 10-fachen rekursiven Addition des SkalarGruppen_Histogramm Riskwertes für 39/8/2/1 folgt. Dieser Wert sei mit SkalarGruppen_Histogramm_10fach benannt, wodurch dann nur einmalig $\begin{matrix}riskGruppe = \left(riskGruppe-SkalarGruppen_Histogramm_10fach\right) \\ / \left(1-SkalarGruppen_Histogramm_10fach\right)\end{matrix}$ durchzuführen ist. Dieses kann mit jeweils geeigneten vorab erzeugten k-fachen Ganzahligen k*39/k*8/k*2/k*1 und ihren korrespondierenden Werten SkalarGruppen_Histogramm_kfach variabel erfolgen. Dieses ist algebraisch eindeutig möglich.

Das oben Beschriebene ist bereits ein Ausführungsbeispiel für den Fall der vorherigen rekursiven Addition der Riskwerte der Einzelpersonen, also der riskX Einzelpersonen-Abstandsverhaltens-Maße, gewesen.

Wird der Server aber diese additive Rekursion der riskX nicht durchführen, so kann er auch jeden riskX Wert als einen riskGruppe Wert wie oben beschrieben betrachten und von diesem jeweils SkalarGruppen_Histogramm_kfach rekursiv subtrahieren und das Gruppenhistogramm mit den Werten k*39/k*8/k*2/k*1 erhöhen. Ein riskX Wert wird dann übrig bleiben, der kleiner als SkalarGruppen_Histogramm_1fach ist. Wir bezeichnen diesen Rest von riskX als riskX_Rest< SkalarGruppen_Histogramm_1fach. Da wir mehrere Personen mit riskX Werten haben werden wir auch mehrere riskX_Rest Reste erhalten. Diese Reste kann der Server dann rekursiv addieren und von dem Ergebnis riskX_von_allen_Resten kann dann wieder die rekursive Subtraktion mit beliebigen aber geeigneten SkalarGruppen_Histogramm_kfach erfolgen, um das Gruppenhistogramm weiter additiv zu befüllen.

Damit ist für diese beiden Fälle (mit und ohne additive Rekursion im Server) das Histogramm für die Gruppe erstellt. Die Histogramme für unterschiedliche Zeiträume können dann auf Veränderungen untersucht werden, ohne dass die Daten der Histogramme von Einzelpersonen übertragen werden musten, wodurch die übertragene Datenmenge sehr stark reduziert wurde. Die Veränderungen werden anhand der Differenzen der Häufungszahlen bzgl. unterschiedlicher Zeiträume bewertet.

Es besteht aber auch eine andere beispielhafte Möglichkeit Veränderungen von Gruppenverhalten zu prüfen, wobei wiederum die gleichen Daten wie oben von den Endgeräten der Einzelpersonen erhoben werden, in den Endgeräten in gleicher Weise wie oben beschrieben vorverarbeitet werden und die gleichen Daten, nämlich die Einzelpersonen-Abstandsverhaltens-Maße riskX, an den Server übertragen werden.

Diese Einzelpersonen-Abstandsverhaltens-Maße werden dann im Server von allen Einzelpersonen addiert zu dem Wert (Achtung, nun rein numerisch und nicht rekursiv additiv wie weietr oben!):$Einzelpersonen - Abstandsverhaltens - Ma β e - Summe = riskA + riskB + riskC + . . .$

Der Server benötigt das Gruppenhistogramm und dessen Erstellung nicht, wenn er die Differenz von Einzelpersonen-Abstandsverhaltens-Maße-Summe Werten unterschiedlicher Zeiträume mittels z.B. eines statistsichen Hypothesentests prüft auf Ablehung einer Nullhypothese. Für diesen Hypothesentests empfiehlt es sich aber hierzu auch die aktuell in den Endgeräten berechneten Standardabweichungen der Einzelpersonen-Abstandsverhaltens-Maße-Summe zu nutzen und diese von den Endgeräten an der Server übertragen zu lassen. Hierdurch wird der statistische Hypothesentest genauer. Es besteht aber auch die Möglichkeit diese Standardabweichungen einmalig zu berechnen, diese dem Server zu übertragen, und dann eine zeitlang nur mit einem geeigneten Mittelwert dieser Standardabweichungen im Server zu arbeiten. Für einen möglichst sehr guten Hypothesentest auf Differenzen der Gruppenverhaltenswerte, also Abstandsdauer-Verhaltensveränderungen der Gruppe, benötigt der Server aber für die Summenbildung zur Ermittlung der Einzelpersonen-Abstandsverhaltens-Maße-Summe die Absolutwerte und zugleich auch die Standardabweichungen der Variablen riskA, riskB, riskC, ... , da der Hypothesentest von der Standardabweichung der Differenz der zwei Einzelpersonen-Abstandsverhaltens-Maße-Summe abhängig ist. Würden keine Standardabweichungen der riskX Werte berechnet werden, so kann die Veränderung des Gruppenverhaltens nicht so sicher bewertet werden. In diesem Fall würde man mindestens die Standardabweichungen als grobe Richtwerte nutzen wollen und ggfs. Veränderungen dreifach bewerten wollen: mit kleinen, mittleren und zuletzt großen angenommenen mittleren Standardabweichungen der riskX der Einzelpersonen.

## Patentansprüche

1. Verfahren zur Bestimmung eines Abstandsverhaltens einer Person einer Gruppe und/oder einer Gruppe,
wobei die Gruppe mindestens zwei Personen umfasst, wobei jeder Person ein Endgerät zuordenbar ist,
wobei die Endgeräte jeweils ausgebildet sind, über einen Messzeitraum einen Messdatensatz zu generieren,
wobei der Messdatensatz eine Verteilung von Einzelkontaktdauern des jeweiligen Endgerätes zu einem oder mehreren Endgeräten der Gruppe für mindestens ein Abstandsintervall umfasst, wobei der Messdatensatz Datentupel (D, E) aus einem in Meter angegebenen Abstandsintervall D und Einzelkontaktdauer E besteht,
wobei eine experimentell erhaltene und/oder bestätigte Gewichtsfunktion W(D, E) verwendet wird, um Riskwerte R zu ermitteln, die ein brutto Risiko einer Virusübertragung für das Datentupel (D, E) angeben,
wobei für mindestens eine der Personen basierend auf dem Messdatensatz des zugeordneten Endgerätes durch das zugeordnete Endgerät ein Einzelperson-Abstandsverhaltens-Maß ermittelt wird, indem das Einzelperson-Abstandsverhaltens-Maß rekursiv aus den Riskwerten ermittelt wird, wobei R₀ = 0 und Rₙ = Rₙ₋₁ + (1 - Rₙ₋₁) rₙ,
wobei der Riskwert des n-ten Einzelkontakts als rₙ gesetzt wird,
wobei das Einzelperson-Abstandsverhaltens-Maß einen Skalar bildet,
wobei das Einzelperson-Abstandsverhaltens-Maß an einen Server oder an andere Geräte bereitgestellt wird, wobei statt des Messdatensatzes das Einzelperson-Abstandsverhaltens-Maß übertragen wird.

2. Verfahren nach Anspruch 1, **dadurch gekennzeichnet, dass** die Einzelkontaktdauern und/oder die Abstandsintervalle in Klassen unterteilt sind.

3. Verfahren nach Anspruch 1 oder 2, **dadurch gekennzeichnet, dass** der Messdatensatz ein Histogramm der Einzelkontaktdauern und/oder Abstandsintervalle umfasst.

4. Verfahren nach Anspruch 1, **dadurch gekennzeichnet, dass** die Gewichtsfunktion eine streng monoton fallende Funktion und/oder Hyperbel bildet.

5. Verfahren nach einem der vorherigen Ansprüche, **dadurch gekennzeichnet, dass** die Endgeräte das jeweilige Einzelperson-Abstandsverhaltens-Maß an ein Zentralverarbeitungsmodul bereitzustellen, wobei das Zentralverarbeitungsmodul basierend auf den bereitgestellten Einzelperson-Abstandsverhaltens-Maßen ein Gruppen-Abstandsverhaltens-Maß ermittelt.

6. Verfahren nach Anspruch 5, **dadurch gekennzeichnet, dass** das Gruppen-Abstandsverhaltens-Maß inhaltlich und/oder zeitlich rekursiv aus den Einzelperson-Abstandsverhaltens-Maßen ermittelt wird.

7. Verfahren nach Anspruch 5 oder 6, **dadurch gekennzeichnet, dass** das Zentralverarbeitungsmodul basierend auf den bereitgestellten Einzelperson-Abstandsverhaltens-Maßen eine Verteilung und/oder ein Histogramm von Gruppenkontaktdauern und/oder Abstandsintervallen bestimmt.

8. Verfahren nach einem der vorherigen Ansprüche, **dadurch gekennzeichnet, dass** Veränderungen eines Kontaktverhaltens basierend auf dem skalaren Einzelperson-Abstandsverhaltens-Maß und/oder dem skalaren Gruppen-Abstandsverhaltens-Maß ermittelt werden.

9. Verfahren nach Anspruch 8, **dadurch gekennzeichnet, dass** die Veränderung basierend auf Vergleichsmethoden und/oder einem Hypothesentest ermittelt wird.

10. Verfahren nach einem der vorherigen Ansprüche, **dadurch gekennzeichnet, dass** das Gruppen-Abstandsverhaltens-Maß und/oder das Einzelperson-Abstandsverhaltens-Maß mindestens täglich ermittelt wird.

11. Computerprogramm zur Ausführung auf einem Endgerät, wobei das Computerprogramm ausgebildet und/oder eingerichtet ist, bei Ausführung das Verfahren nach einem der vorherigen Ansprüche durchzuführen und/oder anzuwenden.

12. Endgerät, **dadurch gekennzeichnet, dass** das Endgerät zur Ausführung und/oder Anwendung des Verfahrens nach einem der Ansprüche 1 bis 10 ausgebildet und/oder eingerichtet ist.

## Claims

1. A method for determining distancing behavior of a person of a group and/or of a group, wherein the group comprises at least two persons, wherein each person can be assigned a terminal device, wherein the terminal devices are respectively adapted to generate, over a measurement period, a measurement data set, wherein the measurement data set comprises a distribution of individual-contact durations of the respective terminal device with respect to one or more terminal devices of the group for at least one distance interval, wherein the measurement data set consists of data tuples (D, E) comprising a distance interval D, specified in meters, and individual-contact duration E, wherein an experimentally obtained and/or confirmed weighting function W(D, E) is used to determine risk values R which indicate a gross risk of virus transmission for the data tuple (D, E), wherein, for at least one of the persons, based on the measurement data set of the assigned terminal device, an individual-person distancing-behavior measure is determined by the assigned terminal device, by determining the individual-person distancing-behavior measure recursively from the risk values, wherein R₀ = 0 and Rₙ = Rₙ₋₁ + (1 - Rₙ₋₁) rₙ, wherein the risk value of the n-th individual contact is set as rₙ, wherein the individual-person distancing-behavior measure forms a scalar, wherein the individual-person distancing-behavior measure is provided to a server or to other devices, wherein, instead of the measurement data set, the individual-person distancing-behavior measure is transmitted.

2. The method according to claim 1, **characterized in that** the individual-contact durations and/or the distance intervals are divided into classes.

3. The method according to claim 1 or 2, **characterized in that** the measurement data set comprises a histogram of the individual-contact durations and/or distance intervals.

4. The method according to claim 1, **characterized in that** the weighting function forms a strictly monotonically decreasing function and/or hyperbola.

5. The method according to any one of the preceding claims, **characterized in that** the terminal devices provide the respective individual-person distancing-behavior measure to a central processing module, wherein the central processing module determines, based on the provided individual-person distancing-behavior measures, a group distancing-behavior measure.

6. The method according to claim 5, **characterized in that** the group distancing-behavior measure is determined recursively in terms of content and/or time from the individual-person distancing-behavior measures.

7. The method according to claim 5 or 6, **characterized in that** the central processing module, based on the provided individual-person distancing-behavior measures, determines a distribution and/or a histogram of group-contact durations and/or distance intervals.

8. The method according to any one of the preceding claims, **characterized in that** changes in contact behavior are determined based on the scalar individual-person distancing-behavior measure and/or the scalar group distancing-behavior measure.

9. The method according to claim 8, **characterized in that** the change is determined based on comparison methods and/or a hypothesis test.

10. The method according to any one of the preceding claims, **characterized in that** the group distancing-behavior measure and/or the individual-person distancing-behavior measure is determined at least daily.

11. A computer program for execution on a terminal device, wherein the computer program is adapted and/or configured, upon execution, to carry out and/or apply the method according to any one of the preceding claims.

12. A terminal device, **characterized in that** the terminal device is adapted and/or configured for carrying out and/or applying the method according to any one of claims 1 to 10.

## Revendications

1. Procédé de détermination d'un comportement de distanciation d'une personne d'un groupe et/ou d'un groupe,
le groupe comprenant au moins deux personnes, un terminal pouvant être associé à chaque personne,
les terminaux étant respectivement configurés pour générer un jeu de données de mesure sur une période de mesure,
le jeu de données de mesure comprenant une répartition des durées de contact individuel du terminal respectif avec un ou plusieurs terminaux du groupe pour au moins un intervalle de distance, le jeu de données de mesure se composant de tuples de données (D, E) constitués d'un intervalle de distance D indiqué en mètres et d'une durée de contact individuel E,
une fonction pondérale W(D, E), obtenue et/ou confirmée par voie expérimentale étant utilisée pour déterminer des valeurs de risque R, qui indiquent un risque brut de transmission de virus pour le tuple de données (D, E),
une mesure de comportement de distanciation de personne individuelle étant déterminée pour au moins l'une des personnes par le terminal associé sur la base du jeu de données de mesure du terminal associé, en déterminant la mesure de comportement de distanciation de personne individuelle de manière récursive à partir des valeurs de risque, où R₀ = 0 et Rₙ = Rₙ₋₁ + (1 - Rₙ₋₁) rₙ, la valeur de risque du nième contact individuel étant fixée à rₙ,
la mesure de comportement de distanciation de personne individuelle formant un scalaire,
la mesure de comportement de distanciation de personne individuelle étant fournie à un serveur ou à d'autres dispositifs, la mesure de comportement de distanciation de personne individuelle étant transmise à la place du jeu de données de mesure.

2. Procédé selon la revendication 1, **caractérisé en ce que** les durées de contact individuel et/ou les intervalles de distance sont subdivisés en classes.

3. Procédé selon la revendication 1 ou 2, **caractérisé en ce que** le jeu de données de mesure comprend un histogramme des durées de contact individuel et/ou des intervalles de distance.

4. Procédé selon la revendication 1, **caractérisé en ce que** la fonction de pondération forme une fonction décroissante strictement monotone et/ou une hyperbole.

5. Procédé selon l'une des revendications précédentes, **caractérisé en ce que** les terminaux fournissent la mesure de comportement de distanciation de personne individuelle respective à un module de traitement central, le module de traitement central déterminant une mesure de comportement de distanciation de groupe sur la base des mesures de comportement de distanciation de personne individuelle fournies.

6. Procédé selon la revendication 5, **caractérisé en ce que** la mesure de comportement de distanciation de groupe est déterminée de manière récursive, en termes de contenu et/ou de temps, à partir des mesures de comportement de distanciation de personne individuelle.

7. Procédé selon la revendication 5 ou 6, **caractérisé en ce que** le module de traitement central détermine une répartition et/ou un histogramme des durées de contact de groupe et/ou des intervalles de distance sur la base des mesures de comportement de distanciation de personne individuelle fournies.

8. Procédé selon l'une des revendications précédentes, **caractérisé en ce que** des modifications d'un comportement de contact sont déterminées sur la base de la mesure scalaire de comportement de distanciation de personne individuelle et/ou de la mesure scalaire de comportement de distanciation de groupe.

9. Procédé selon la revendication 8, **caractérisé en ce que** la modification est déterminée sur la base de méthodes de comparaison et/ou d'un test d'hypothèse.

10. Procédé selon l'une des revendications précédentes, **caractérisé en ce que** la mesure de comportement de distanciation de groupe et/ou la mesure de comportement de distanciation de personne individuelle est déterminée au moins quotidiennement.

11. Programme informatique destiné à être exécuté sur un terminal, le programme informatique étant configuré et/ou conçu pour, lors de l'exécution, mettre en œuvre et/ou appliquer le procédé selon l'une des revendications précédentes.

12. Terminal, **caractérisé en ce que** le terminal est configuré et/ou conçu pour mettre en œuvre et/ou appliquer le procédé selon l'une des revendications 1 à 10.
